# EUROPÄISCHE PATENTSCHRIFT

(11) **EP 4 008 116 B1**
(45) Veröffentlichungstag und Bekanntmachung des Hinweises auf die Patenterteilung: **31.08.2022**
(21) Anmeldenummer: 21701788.8
(22) Anmeldetag: 25.01.2021
(51) Int. Cl.: H04W 4/46, H04W 4/40

(54) **VERFAHREN UND KRAFTFAHRZEUG ZUR UNFALLSCHADEN-DETEKTION UND KOMMUNIKATION**
METHOD AND VEHICLE FOR DETECTING ACCIDENTAL DAMAGE AND COMMUNICATION
PROCÉDÉ ET VÉHICULE DE DÉTECTION DE DOMMAGES ACCIDENTELS ET DE COMMUNICATION

(30) Priorität: 05.03.2020 DE 102020105949
(43) Veröffentlichungstag der Anmeldung: 08.06.2022
(73) Patentinhaber: Audi AG, 85045 Ingolstadt (DE)
(72) Erfinder: HAGEN, Harald, 95473 Creußen (DE); WENDT, Willi, 85139 Wettstetten (DE)
(86) Internationale Anmeldenummer: PCT/EP2021/051554
(87) Internationale Veröffentlichungsnummer: WO 2021/175510

(56) Entgegenhaltungen:
- DE-A1-102010 001 006
- DE-A1-102017 009 593
- DE-A1-102017 219 818
- US-B1- 10 032 226

## Beschreibung

Die vorliegende Erfindung betrifft ein System zur Detektion eines Unfallschadens bei einem geparkten Fahrzeug und zur Kommunikation mit dem Fahrzeughalter und gegebenenfalls dem Verursacher des Schadens und ein Verfahren zum Betreiben des Systems.

Um ein geparktes Fahrzeug während der Abwesenheit des Fahrzeugführers auf Parkkollisionen zu überwachen und gegebenenfalls den Fahrzeughalter oder Fuhrparkmanager über Beschädigungen zu informieren, werden Systeme eingesetzt, die Parkkollisionen detektieren und den Fahrzeughalter oder Fuhrparkmanager bzw. einen autorisierten Adressaten benachrichtigen.

Über einen Zentralsensor oder einzelne Sensoren, die an Fahrzeugaußenteilen befestigt sind, werden Fahrzeugerschütterungen und Körperschall-Ereignisse an Karosserieteilen detektiert. Diese Körperschall-Signale werden ausgewertet und je nach Schwere als ein Schadensereignis (Kratzer/Schlag/ Delle/Stauchung) klassifiziert. Über Telematik wird anschließend der abwesende Fahrzeugführer oder Fahrzeughalter informiert. Zeitversetzt wird ebenso die Umfeld-Kamera des Fahrzeugs in Betrieb gesetzt und das Umfeld des Fahrzeugs kann von dem autorisierten Nutzer über Fernzugriff eingesehen werden und/oder es wird automatisch mit der Umfeld-Kamera eine Aufnahme oder eine Videoaufzeichnung erstellt.

Nach diesem Verfahren wird nur dem Fahrzeugführer oder Fahrzeughalter eine Information über das Schadenereignis mitgeteilt. Zur Identifikation des Schadensverursachers ist ein aufwändiges Auswerten von Bildern und Aufzeichnungen erforderlich, und es ist keine Möglichkeit zur direkten Kommunikation mit dem Schädiger vorgesehen.

Die US 2019/156594 A1 offenbart Systeme und Verfahren zur Detektion eines Unfalls eines Kraftfahrzeugs. Die Beschleunigung des Fahrzeugs wird unter Verwendung eines Beschleunigungsmessers eines mobilen Geräts gemessen, der sich innerhalb des Fahrzeugs befindet. Das System bestimmt die Größe jeder Beschleunigungsmessung und prüft, ob die Größe einen oder mehrere Schwellenwerte übersteigt. Das System bestimmt auch die Anzahl von Beschleunigungsereignissen innerhalb eines Zeitfensters und ob die Anzahl einen oder mehrere Schwellenwerte überschreitet. Das System bestimmt basierend auf den Größen der Beschleunigung, der Anzahl der Beschleunigungsereignisse und verschiedenen Schwellenwerten, ob ein Unfall mit dem Fahrzeug aufgetreten ist.

Aus der KR 2004/0085574 A ist ein Fahrzeugunfallaufzeichnungsgerät eine mit einer mobilen Kommunikationseinheit bekannt, das IDs von Mobiltelefonen oder PDAs des Fahrers eines an dem Unfall beteiligten Fahrzeugs und von Passanten, die den Unfall beobachten, während des Unfalls über Bluetooth-Kommunikation empfängt, automatisch aufzeichnet und über ein Mobilfunknetzwerk an einen Server überträgt, um Zeugen des Unfalls zu identifizieren.

Die CN 108965439 A betrifft ein Notfallsystem für Verkehrsunfälle, das auf einem WiFi-Kommunikationsmodul basiert. Das Notfallsystem umfasst ein Unfallnotfallmodul und mehrere Fahrzeug-Überwachungsmodule. Jedes Überwachungsmodul umfasst eine Zentraleinheit, eine Schnittstelle, die Zugang zu einem elektronischen Gerät ermöglicht, eine Erfassungseinheit zum Sammeln von Fahrzeuginformationen an der Unfallstelle, eine Gesichtserkennungseinheit zum Sammeln von Informationen über den Fahrer an der Unfallstelle, eine Eingabeeinheit die eine Interaktionsanfrage an die Zentraleinheit sendet, eine Positionsermittlungseinheit zur Ermittlung der Position der Unfallstelle, eine WiFi-Kommunikationseinheit zur Herstellung einer Verbindung zwischen den Fahrzeug-Überwachungsmodul und dem Unfallnotfallmodul, und eine Stromversorgungseinheit, wobei die Zentraleinheit mit der Schnittstelle, der Erfassungseinheit zum Sammeln von Fahrzeuginformationen, der Gesichtserkennungseinheit, der Eingabeeinheit, der Positionsermittlungseinheit und der WiFi-Kommunikationseinheit verbunden ist.

Die DE 10 2017 219818 A1 betrifft eine Vorrichtung, ein Verfahren und ein System zum Überwachen eines Fahrzeugumfelds eines parkenden Fahrzeugs sowie ein Fahrzeug mit einer solchen Vorrichtung. Eine Kollisionsüberwachungseinrichtung ist eingerichtet, eine Kollision eines Objekts, insbesondere eines Verkehrsteilnehmers oder dessen Fahrzeug, mit dem parkenden Fahrzeug sensorisch festzustellen, und eine Erfassungseinheit ist eingerichtet, ein von einer Funksignalquelle innerhalb des Fahrzeugumfelds erzeugtes Funksignal zu erfassen und entsprechende Sensordaten zu erzeugen, wenn eine Kollision des parkenden Fahrzeugs festgestellt wird. Eine Auswertungseinheit ist eingerichtet, aus den erzeugten Sensordaten ein Identifikationsmerkmal abzuleiten, anhand dessen die Funksignalquelle des erfassten Funksignals identifizierbar ist, und eine Ausgabeeinheit ist eingerichtet, das abgeleitete Identifikationsmerkmal in einer Speichereinheit zu speichern und/oder über eine Kommunikationsverbindung zu versenden.

Vor diesem Hintergrund hat sich die Erfindung die Aufgabe gestellt, Verfahren und Vorrichtungen zur Verfügung zu stellen, mit denen eine automatische Identifikation des Schadensverursachers und eine direkte Kommunikation zwischen dem Fahrzeug und/oder dessen Halter und dem Schädiger ermöglicht werden.

Die Aufgabe wird erfindungsgemäß gelöst durch ein Verfahren mit den Merkmalen des Anspruchs 1 sowie eine Vorrichtung mit den Merkmalen des Anspruchs 9. Ausgestaltungen und Weiterbildungen der Erfindung ergeben sich aus den abhängigen Ansprüchen und der Beschreibung.

Gegenstand der Erfindung ist ein Verfahren, bei dem bei Detektion einer Beschädigung eines geparkten Kraftfahrzeugs mindestens ein Kommunikationsmodul des Kraftfahrzeugs die MAC-Adressen der sich im Umfeld des Kraftfahrzeugs befindenden mobilen Kommunikationsvorrichtungen erfasst und an eine mobile Kommunikationsvorrichtung des Fahrzeughalters übermittelt. Die mobilen Kommunikationsvorrichtungen im Umfeld des Kraftfahrzeugs müssen zur Kommunikation mit dem mindestens einen Kommunikationsmodul des Kraftfahrzeugs befähigt sein. In einer Ausführungsform handelt es sich bei dem mindestens einen Kommunikationsmodul des Kraftfahrzeugs um ein WLAN-Modul. In einer anderen Ausführungsform handelt es sich bei dem mindestens einen Kommunikationsmodul des Kraftfahrzeugs um ein Bluetooth-Modul. In noch einer anderen Ausführungsform handelt es sich bei dem mindestens einen Kommunikationsmodul des Kraftfahrzeugs um ein Mobilfunk-Modul. In wieder einer anderen Ausführungsform handelt es sich bei dem mindestens einen Kommunikationsmodul des Kraftfahrzeugs um ein Infrarot-Modul.

In einer Ausführungsform des Verfahrens wird bei Detektion einer Beschädigung des geparkten Kraftfahrzeugs von mindestens einem Kommunikationsmodul des Kraftfahrzeugs ein Störsignal ausgesendet, um sich im Umfeld des Kraftfahrzeugs befindende mobile Kommunikationsvorrichtungen in einen Empfangsmodus zu schalten und in einen Suchmodus zu versetzen, wodurch die sich im Umfeld des Kraftfahrzeugs befindenden mobilen Kommunikationsvorrichtungen für das mindestens eine Kommunikationsmodul des Kraftfahrzeugs sichtbar werden und durch das mindestens eine Kommunikationsmodul des Kraftfahrzeugs aktiviert werden.

Ist das mindestens eine Kommunikationsmodul des Kraftfahrzeugs ein WLAN-Modul, so werden durch das aktive Störsignal WLAN-fähige mobile Kommunikationsvorrichtungen im Umfeld des Kraftfahrzeugs, die gegebenenfalls bereits in anderen Netzen als dem WLAN des geparkten Kraftfahrzeugs eingeloggt sind, in den Empfangsmodus geschaltet und durch den sich anschließenden Suchmodus für das mindestens eine WLAN-Modul des geparkten Kraftfahrzeugs sichtbar und können durch das mindestens eine WLAN-Modul des geparkten Kraftfahrzeugs aktiviert werden. Dadurch erfasst das mindestens eine WLAN-Modul des geparkten Kraftfahrzeugs die MAC-Adressen der sich im Umfeld des geparkten Kraftfahrzeugs befindenden WLAN-fähigen mobilen Kommunikationsvorrichtungen.

Die MAC-Adresse (Media-Access-Control-Adresse) ist die Hardware-Adresse des Netzwerkadapters eines mobilen Kommunikationsgerätes, die als eindeutiger Identifikator des Geräts in einem Rechnernetz dient. Man spricht auch von physischer Adresse oder Geräteadresse. In einer Ausführungsform des Verfahrens erfolgt ein Abgleich der MAC-Adresse mit der IP-Adresse der mobilen Kommunikationsvorrichtung, um den Verursacher des Schadens zu ermitteln. In einer weiteren Ausführungsform des Verfahrens übermittelt das geparkte Kraftfahrzeug eine Nachricht an eine mobile Kommunikationsvorrichtung des Verursachers des Schadens, z.B. über SMS oder WAP Push. Beispielweise könnte eine Nachricht lauten: "Schaden wurde erkannt. Bitte melden Sie sich beim Fahrzeug-WLAN an zur Angabe Ihrer Kontaktdaten" oder "Schaden wurde erkannt. Bitte nehmen Sie über das Fahrzeug-WLAN Kontakt mit dem Halter auf".

In einer weiteren Ausführungsform werden sich im Umfeld des geparkten Kraftfahrzeugs befindende WLAN-fähige mobile Kommunikationsvorrichtungen automatisch im WLAN des Kraftfahrzeugs eingeloggt.

In einer weiteren Ausführungsform des Verfahrens wird dem Verursacher des Schadens und im Fahrzeugumfeld befindlichen Personen ein selbständiges Einloggen in den WLAN- Server des Fahrzeugs und damit ein aktiver Kommunikationsaufbau ermöglicht, um Nachrichten zu hinterlassen (Name, Adresse, Unfallinfos, Versicherungsdaten usw.). Diese Möglichkeit vermeidet nicht rechtskonforme "Zettelnachrichten" und macht eine Unfallmeldung bei der Polizei entbehrlich. Eine Regulierung des Schadens zwischen Verursacher und Fahrzeughalter kann vereinfacht werden.

In einer weiteren Ausführungsform des Verfahrens wird von dem geparkten Kraftfahrzeug eine für den Verursacher des Schadens bestimmte Nachricht angezeigt. In einer Ausführungsform wird die Nachricht durch ein Head-up-Display (HUD) des Kraftfahrzeugs auf eine Scheibe des Kraftfahrzeugs projiziert. Beispielweise könnte eine Nachricht lauten: "Schaden wurde erkannt. Bitte melden Sie sich beim Fahrzeug-WLAN an zur Angabe Ihrer Kontaktdaten" oder "Schaden wurde erkannt. Bitte nehmen Sie über das Fahrzeug-WLAN Kontakt mit dem Halter auf".

In einer weiteren Ausführungsform des Verfahrens wird über das WLAN des geparkten Kraftfahrzeugs eine direkte Kommunikation zwischen dem Fahrzeughalter und dem Verursacher des Schadens hergestellt.

Gegenstand der Erfindung ist auch ein Kraftfahrzeug mit einer zur Durchführung des erfindungsgemäßen Verfahrens eingerichteten Vorrichtung.

Die Vorrichtung umfasst Mittel zur Detektion eines Unfallschadens. In einer Ausführungsform umfassen die Mittel zur Detektion eines Unfallschadens Mittel zur Detektion und Auswertung von Erschütterungen des Kraftfahrzeugs und von Körperschall-Ereignissen an Karosserieteilen des Kraftfahrzeugs. In einer weiteren Ausführungsform umfassen die Mittel zur Detektion eines Unfallschadens mindestens einen Beschleunigungssensor. Die Mittel zur Auswertung sind dafür eingerichtet, Erschütterungen und Körperschall-Ereignisse je nach Schwere als ein Schadensereignis (Kratzer/Schlag/Delle/Stauchung) zu klassifizieren. Derartige Systeme zur Detektion eines Unfallschadens sind dem Fachmann im Prinzip bekannt.

Die Vorrichtung umfasst weiterhin ein Zentralmodul, das dafür eingerichtet ist, von den Mitteln zur Detektion eines Unfallschadens aktiviert zu werden. Das Zentralmodul ist verbunden mit mindestens einem Kommunikationsmodul des Kraftfahrzeugs, das beispielsweise ein WLAN-Modul sein kann. In einer Ausführungsform ist das Zentralmodul mit mehreren Kommunikationsmodulen verbunden, die an der Karosserie des Kraftfahrzeugs angeordnet sind. In einer Ausführungsform sind vier Kommunikationsmodule so an der Karosserie des Kraftfahrzeugs angeordnet, dass sie einen möglichst großen Abstand voneinander aufweisen, z.B. unter den Scheinwerfern und den Rückleuchten des Kraftfahrzeugs. Dadurch ist gewährleistet, dass der gesamte Umgebungsbereich des Kraftfahrzeugs (360°) erfasst wird. Mit den Kommunikationsmodulen ist im Parkmodus eine Car-to-X-Kommunikation nach außen möglich.

Das Zentralmodul ist dafür eingerichtet, das mindestens eine Kommunikationsmodul des Kraftfahrzeugs ein Störsignal aussenden zu lassen, das sich im Umfeld des Kraftfahrzeugs befindende mobile Kommunikationsvorrichtungen in einen Empfangsmodus schaltet und in einen Suchmodus versetzt, und dafür, die sich im Umfeld des Kraftfahrzeugs befindenden mobilen Kommunikationsvorrichtungen durch das mindestens eine Kommunikationsmodul des Kraftfahrzeugs aktivieren und deren MAC-Adressen ermitteln zu lassen. In einer Ausführungsform ist das Zentralmodul dafür eingerichtet, aus der ermittelten MAC-Adresse einer sich im Umfeld des Kraftfahrzeugs befindenden mobilen Kommunikationsvorrichtung die zugehörige IP-Adresse zu ermitteln. Die Feststellung der MAC-Adresse und der Abgleich mit der IP-Adresse ermöglicht eine nachträgliche Kontaktaufnahme mit dem Verursacher des Schadens, beispielsweise über Push-Nachrichten. Alternativ ermöglicht die IP-Adresse, bei Unfallflucht den Verursacher des Schadens direkt ermitteln zu lassen.

Das Zentralmodul ist weiterhin als Wireless Access Point ausgestaltet und dafür eingerichtet, eine drahtlose Verbindung zu einer mobilen Kommunikationsvorrichtung des Fahrzeughalters herzustellen und Informationen an die mobile Kommunikationsvorrichtung des Fahrzeughalters zu übermitteln. In einer weiteren Ausführungsform ist das Zentralmodul dafür eingerichtet, eine drahtlose Verbindung zu einer mobilen Kommunikationsvorrichtung des Verursachers eines Unfallschadens herzustellen und Informationen an die mobile Kommunikationsvorrichtung des Verursachers eines Unfallschadens zu übermitteln. In einer weiteren Ausführungsform ist das Zentralmodul dafür eingerichtet, eine drahtlose Verbindung zum Internet herzustellen. In einer weiteren Ausführungsform ist das Zentralmodul dafür eingerichtet, eine bidirektionale drahtlose Verbindung zwischen einer mobilen Kommunikationsvorrichtung des Fahrzeughalters und einer mobilen Kommunikationsvorrichtung des Verursachers eines Unfallschadens herzustellen.

Zu den Vorteilen des erfindungsgemäßen Verfahrens und der vorgestellten Vorrichtung zählt, dass eine Möglichkeit zur direkten Kommunikation des Verursachers eines Schadens an einem geparkten Kraftfahrzeugs mit dem Fahrzeughalter bereitgestellt wird. Der Verursacher des Schadens kann Informationen und Nachrichten an den Fahrzeughalter übermitteln. Dadurch kann die Regulierung des Schadens zwischen Verursacher und Fahrzeughalter vereinfacht werden. Nicht rechtskonforme "Zettelnachrichten" werden vermieden und eine Unfallmeldung bei der Polizei wird entbehrlich.

Weitere Vorteile und Ausgestaltungen der Erfindung ergeben sich aus der Beschreibung und den beiliegenden Zeichnungen.

Es versteht sich, dass die vor anstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsformen in den Zeichnungen schematisch dargestellt und wird unter Bezugnahme auf die Zeichnungen weiter beschrieben. Es zeigt:

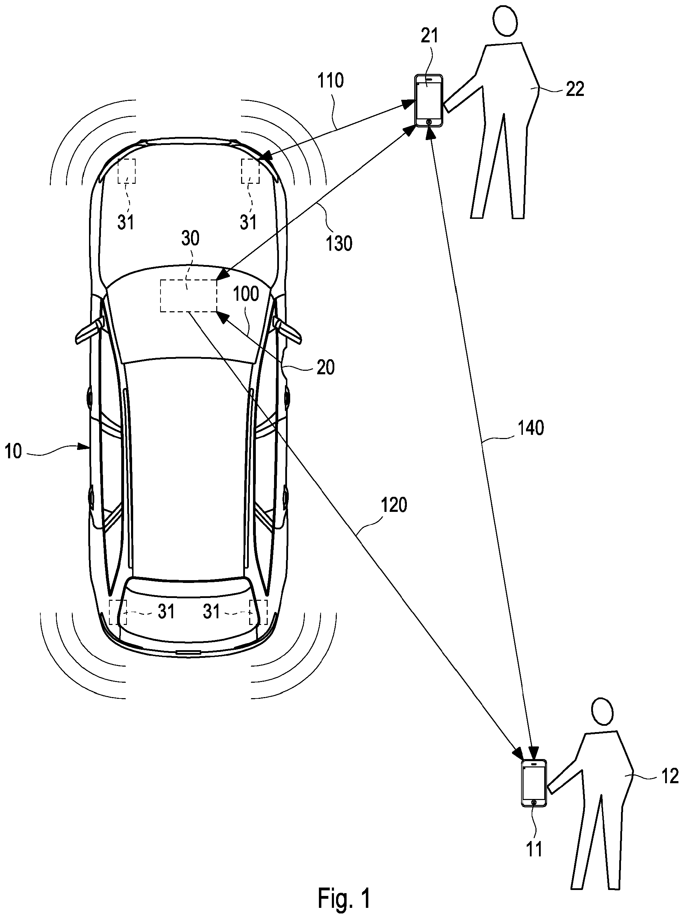

- Figur 1: eine Ausführungsform eines erfindungsgemäßen Kraftfahrzeugs und eine Veranschaulichung des erfindungsgemäßen Verfahrens.

Figur 1 zeigt ein erfindungsgemäßes Kraftfahrzeug 10 mit einem Zentralmodul 30, das in bidirektionaler Verbindung mit vier WLAN-Modulen 31 steht, die an den Ecken der Karosserie des Kraftfahrzeugs 10 angeordnet sind. An einer Seite des Kraftfahrzeugs wurde ein Schaden 20 verursacht.

In Figur 1 schematisch dargestellt sind auch der Halter 12 des Kraftfahrzeugs 10 und eine mobile Kommunikationsvorrichtung 11 (z.B. ein Smartphone oder ein Tablet-Computer) des Fahrzeughalters 12. Weiterhin sind der Verursacher 22 des Schadens 20 und eine WLAN-fähige mobile Kommunikationsvorrichtung 21 (z.B. ein Smartphone oder ein Tablet-Computer) des Verursachers 22 abgebildet.

Zur Veranschaulichung des erfindungsgemäßen Verfahrens sind in Figur 1 auch verschiedene beispielhafte Verfahrensschritte 100, 110, 120, 130, und 140 symbolisiert.

In Schritt 100 wird der Schaden 20 durch Auswertung der von in Figur 1 nicht dargestellten Sensoren detektierten Erschütterung des Kraftfahrzeugs 10 bzw. der durch das Schadensereignis verursachten Körperschallsignale detektiert und es erfolgt eine Aktivierung des Zentralmoduls 30 und der damit verbundenen WLAN-Module 31. Das Zentralmodul 30 bootet ein offenes WLAN.

In Schritt 110 wird über die WLAN-Module 31 ein Störsignal ausgesendet, das die sich im Umfeld des Kraftfahrzeugs 10 befindende WLAN-fähige fähige mobile Kommunikationsvorrichtung 21 des Verursachers 22 kurz stört, damit diese auf Empfangsmodus geht und von den WLAN-Modulen 31 erkannt wird. Dadurch wird die MAC Adresse der WLAN-fähigen mobilen Kommunikationsvorrichtung 21 des Verursachers 22 ermittelt und ist zur weiteren Auswertung verfügbar. Die ermittelte MAC-Adresse wird in Schritt 120 an die mobile Kommunikationsvorrichtung 11 des Fahrzeughalters 12 übermittelt. Die Übermittlung 120 kann beispielsweise über Mobilfunk oder über das Internet erfolgen.

In Schritt 130 erfolgt über die WLAN-Module 31 und die zwischen mobile Kommunikationsvorrichtung 21 eine Interaktion zwischen dem Zentralmodul 30 und des Verursacher 22. Die Interaktion kann beispielsweise in der Übermittlung einer Nachricht an den Verursacher 22 bestehen, oder darin, dass der Verursacher 22 sich in das WLAN des Kraftfahrzeugs 10 einloggt, um eine Nachricht oder Informationen zu hinterlassen. Die Interaktion kann beispielsweise auch zusätzlich umfassen, dass über ein HUD (nicht dargestellt) eine Nachricht an den Verursacher 22 auf eine Scheibe des Kraftfahrzeugs 10 projiziert wird.

In einer Variante des Verfahrens stellt das Zentralmodul 30 in Schritt 140 eine direkte bidirektionale Kommunikationsverbindung zwischen der mobilen Kommunikationsvorrichtung 11 des Fahrzeughalters 12 und der mobilen Kommunikationsvorrichtung 21 des Verursachers 22 her, so dass diese direkt miteinander Informationen austauschen können.

### Bezugszeichenliste

- 10: geparktes Fahrzeug
- 11: mobile Kommunikationsvorrichtung des Fahrzeughalters
- 12: Fahrzeughalter
- 20: Schaden
- 21: mobile Kommunikationsvorrichtung des Verursachers des Schadens
- 22: Verursacher des Schadens
- 30: Zentralmodul
- 31: WLAN-Modul
- 100: Schadensdetektion
- 110: Ermittlung MAC-Adresse
- 120: Übermittlung MAC-Adresse
- 130: Nachrichtenübermittlung
- 140: bidirektionale Kommunikation

## Patentansprüche

1. Verfahren, worin bei Detektion einer Beschädigung eines geparkten Kraftfahrzeugs (10) von mindestens einem Kommunikationsmodul (31) des Kraftfahrzeugs (10) ein Störsignal ausgesendet wird, um sich im Umfeld des Kraftfahrzeugs befindende mobile Kommunikationsvorrichtungen (21) in einen Empfangsmodus zu schalten und in einen Suchmodus zu versetzen, wodurch die sich im Umfeld des Kraftfahrzeugs (10) befindenden mobilen Kommunikationsvorrichtungen (21) für das mindestens eine Kommunikationsmodul (31) des Kraftfahrzeugs (10) sichtbar werden und durch das mindestens eine Kommunikationsmodul (31) des Kraftfahrzeugs (10) aktiviert werden, und worin das mindestens eine Kommunikationsmodul (31) des Kraftfahrzeugs (10) die MAC-Adressen der sich im Umfeld des Kraftfahrzeugs (10) befindenden mobilen Kommunikationsvorrichtungen (21) erfasst und an eine mobile Kommunikationsvorrichtung (11) des Fahrzeughalters (12) übermittelt.

2. Verfahren nach Anspruch 1, worin das geparkte Kraftfahrzeug (10) eine Nachricht an ein mobiles Kommunikationsvorrichtung (21) des Verursachers (22) eines Schadens (20) an dem geparkten Kraftfahrzeug (10) übermittelt.

3. Verfahren nach Anspruch 2, worin die Übermittlung der Nachricht über WAP Push erfolgt.

4. Verfahren nach einem der voranstehenden Ansprüche, worin sich im Umfeld des geparkten Kraftfahrzeugs (10) befindende WLAN-fähige mobile Kommunikationsvorrichtungen (21) automatisch in einem WLAN des Kraftfahrzeugs (10) eingeloggt werden.

5. Verfahren nach einem der voranstehenden Ansprüche, worin dem Verursacher (22) des Schadens (20) und weiteren im Umfeld des Fahrzeugs (10) befindlichen Personen ein selbständiges Einloggen in einen WLAN-Server des Fahrzeugs (10) ermöglicht wird, um Nachrichten zu hinterlassen.

6. Verfahren nach einem der voranstehenden Ansprüche, worin von dem geparkten Kraftfahrzeug (10) eine für den Verursacher (22) des Schadens (20) bestimmte Nachricht angezeigt wird.

7. Verfahren nach einem der voranstehenden Ansprüche, worin über das WLAN des geparkten Kraftfahrzeugs (10) eine direkte Kommunikation zwischen dem Fahrzeughalter (12) und dem Verursacher (22) des Schadens (20) hergestellt wird.

8. Kraftfahrzeug (10) umfassend Mittel zur Detektion eines Unfallschadens (20), ein Zentralmodul (30), das verbunden ist mit mindestens einem Kommunikationsmodul (31) des Kraftfahrzeugs (10), und das dafür eingerichtet ist, von den Mitteln zur Detektion eines Unfallschadens (20) aktiviert zu werden und das mindestens eine Kommunikationsmodul (31) des Kraftfahrzeugs (10) ein Störsignal aussenden zu lassen, welches sich im Umfeld des Kraftfahrzeugs (10) befindende mobile Kommunikationsvorrichtungen (21) in einen Empfangsmodus schaltet und in einen Suchmodus versetzt, und dafür eingerichtet ist, die sich im Umfeld des Kraftfahrzeugs (10) befindenden mobilen Kommunikationsvorrichtungen (21) durch das mindestens eine Kommunikationsmodul (31) des Kraftfahrzeugs (10) aktivieren und deren MAC-Adressen ermitteln zu lassen, wobei das Zentralmodul als Wireless Access Point ausgestaltet und dafür eingerichtet ist, eine drahtlose Verbindung zu einer mobilen Kommunikationsvorrichtung (11) des Fahrzeughalters (12) herzustellen und Informationen an die mobile Kommunikationsvorrichtung (11) des Fahrzeughalters (12) zu übermitteln.

9. Kraftfahrzeug (10) nach Anspruch 9, worin das Zentralmodul (30) dafür eingerichtet ist, eine drahtlose Verbindung zu einer mobilen Kommunikationsvorrichtung (21) des Verursachers (22) eines Schadens (20) an dem Kraftfahrzeug (10) herzustellen und Informationen an die mobile Kommunikationsvorrichtung (21) des Verursachers (22) zu übermitteln.

## Claims

1. Method wherein, when damage to a parked motor vehicle (10) is detected, an interfering signal is transmitted by at least one communication module (31) of the motor vehicle (10) to switch mobile communication devices (21) located in the vicinity of the motor vehicle into a receiving mode and set them into a search mode, whereby the mobile communication devices (21) located in the vicinity of the motor vehicle (10) become visible to the at least one communication module (31) of the motor vehicle (10) and are activated by the at least one communication module (31) of the motor vehicle (10), and wherein the at least one communication module (31) of the motor vehicle (10) detects the MAC addresses of the mobile communication devices (21) located in the vicinity of the motor vehicle (10) and transmits them to a mobile communication device (11) of the vehicle owner (12).

2. Method according to claim 1, wherein the parked motor vehicle (10) transmits a message to a mobile communication device (21) of the initiator (22) of damage (20) to the parked motor vehicle (10).

3. Method according to claim 2, wherein the message is transmitted via WAP Push.

4. Method according to any of the preceding claims, wherein WLAN-enabled mobile communication devices (21) located in the vicinity of the parked motor vehicle (10) are automatically logged into a WLAN of the motor vehicle (10).

5. Method according to any of the preceding claims, wherein the initiator (22) of the damage (20) and other persons located in the vicinity of the vehicle (10) are enabled to log into a WLAN server of the vehicle (10) independently in order to leave messages.

6. Method according to any of the preceding claims, wherein a message intended for the initiator (22) of the damage (20) is displayed by the parked motor vehicle (10).

7. Method according to any of the preceding claims, wherein direct communication is established between the vehicle owner (12) and the initiator (22) of the damage (20) via the WLAN of the parked motor vehicle (10).

8. Motor vehicle (10) comprising means for detecting accidental damage (20), a central module (30) which is connected to at least one communication module (31) of the motor vehicle (10) and which is configured to be activated by the means for detecting accidental damage (20) and to cause the at least one communication module (31) of the motor vehicle (10) to emit an interfering signal which switches mobile communication devices (21) located in the vicinity of the motor vehicle (10) into a receiving mode and sets them into a search mode, and is configured to allow the mobile communication devices (21) located in the environment of the motor vehicle (10) to be activated by the at least one communication module (31) of the motor vehicle (10) and to allow their MAC addresses to be determined, wherein the central module is designed as a wireless access point and is configured to establish a wireless connection with a mobile communication device (11) of the vehicle owner (12) and to transmit information to the mobile communication device (11) of the vehicle owner (12).

9. Motor vehicle (10) according to claim 9, wherein the central module (30) is configured to establish a wireless connection with a mobile communication device (21) of the initiator (22) of damage (20) to the motor vehicle (10) and to transmit information to the mobile communication device (21) of the initiator (22).

## Revendications

1. Procédé, dans lequel lors de la détection d'un endommagement d'un véhicule automobile (10) stationné par au moins un module de communication (31) du véhicule automobile (10), un signal perturbateur est émis afin de commuter des dispositifs de communication (21) mobiles se trouvant dans l'environnement du véhicule automobile dans un mode de réception et de les amener dans un mode de recherche, par quoi les dispositifs de communication (21) mobiles se trouvant dans l'environnement du véhicule automobile (10) sont visibles pour l'au moins un module de communication (31) du véhicule automobile (10) et sont activés par l'au moins un module de communication (31) du véhicule automobile (10), et dans lequel l'au moins un module de communication (31) du véhicule automobile (10) détecte les adresses MAC des dispositifs de communication (21) mobiles se trouvant dans l'environnement du véhicule automobile (10) et les transmet à un dispositif de communication (11) mobile du propriétaire du véhicule (12).

2. Procédé selon la revendication 1, dans lequel le véhicule automobile (10) stationné transmet un message à un dispositif de communication (21) mobile de l'auteur (22) d'un dommage (20) au véhicule automobile (10) stationné.

3. Procédé selon la revendication 2, dans lequel la transmission du message est effectuée par WAP Push.

4. Procédé selon l'une quelconque des revendications précédentes, dans lequel des dispositifs de communication (21) mobiles compatibles WLAN se trouvant dans l'environnement du véhicule automobile (10) stationné sont connectés automatiquement dans un WLAN du véhicule automobile (10).

5. Procédé selon l'une quelconque des revendications précédentes, dans lequel une connexion autonome est permise dans un serveur WLAN du véhicule (10) pour l'auteur (22) du dommage (20) et d'autres personnes se trouvant dans l'environnement du véhicule (10) afin de laisser des messages.

6. Procédé selon l'une quelconque des revendications précédentes, dans lequel un message destiné à l'auteur (22) du dommage (20) est affiché par le véhicule automobile (10) stationné.

7. Procédé selon l'une quelconque des revendications précédentes, dans lequel une communication directe entre le propriétaire du véhicule (12) et l'auteur (22) du dommage (20) est établie par le biais du WLAN du véhicule automobile (10) stationné.

8. Véhicule automobile (10) comprenant des moyens de détection d'un dommage accidentel (20), un module central (30) qui est relié à au moins un module de communication (31) du véhicule automobile (10), et qui est conçu afin d'être activé par les moyens de détection d'un dommage accidentel (20) et de faire envoyer par l'au moins un module de communication (31) du véhicule automobile (10) un signal perturbateur qui commute des dispositifs de communication (21) mobiles se trouvant dans l'environnement du véhicule automobile (10) dans un mode de réception et les amène dans un mode de recherche, et est conçu afin de faire activer les dispositifs de communication (21) mobiles se trouvant dans l'environnement du véhicule automobile (10) par l'au moins un module de communication (31) du véhicule automobile (10) et de faire déterminer leurs adresses MAC, dans lequel le module central est configuré comme point d'accès sans fil et conçu afin d'établir une liaison sans fil avec un dispositif de communication (11) mobile du propriétaire de véhicule (12) et de transmettre des informations au dispositif de communication (11) mobile du propriétaire de véhicule (12).

9. Véhicule automobile (10) selon la revendication 9, dans lequel le module central (30) est conçu afin d'établir une liaison sans fil avec un dispositif de communication (21) mobile de l'auteur (22) d'un dommage (20) au véhicule automobile (10) et de transmettre des informations au dispositif de communication mobile (21) de l'auteur (22).
